# FASCICULE DE BREVET EUROPEEN

(11) **EP 1 824 651 B1**
(45) Date de publication et mention de la délivrance du brevet: **04.12.2013**
(21) Numéro de dépôt: 05802511.5
(22) Date de dépôt: 14.09.2005
(51) Int. Cl.: B29B 11/04, B29B 11/14, B29C 51/14, B29C 69/00

(54) **PROCEDE DE REALISATION D'UNE PREFORME POUR RECIPIENTS THERMOFORMES**
VERFAHREN ZUM HERSTELLEN EINER VORFORM FÜR WARMGEFORMTE BEHÄLTER
METHOD OF PRODUCING A PREFORM FOR THERMOFORMED CONTAINERS

(30) Priorité: 15.09.2004 FR 0409753
(43) Date de publication de la demande: 29.08.2007
(73) Titulaire: SIAMP CEDAP, 98000 Monaco (MC)
(72) Inventeur: PINSOLLE, Francis, F-06230 Villefranche/Mer (FR)
(74) Mandataire: Goreaud, Alexandra
(86) Numéro de dépôt international: PCT/FR2005/002274
(87) Numéro de publication internationale: WO 2006/030130

(56) Documents cités:
- EP-A- 0 482 082
- EP-A- 0 533 437
- FR-A- 2 009 903
- US-A- 2 781 552
- US-A- 4 122 147
- US-A- 4 790 972
- US-A- 5 091 231

## Description

L'invention concerne un procédé de réalisation d'une préforme pour récipients thermoformés et plus particulièrement d'une préforme se présentant sous la forme d'un jeton (selon la revendication 1). L'invention concerne également un jeton constituant une préforme pour le thermoformage d'un récipient selon la revendication 9.

Pour la réalisation de récipients de forme galbée, par exemple pour les yaourts, il est connu d'utiliser le thermoformage à partir d'une préforme constituée par un jeton de polystyrène d'environ 5mm d'épaisseur. Un tel jeton est chauffé, puis étiré vers le fond et thermoformé. Il est ainsi possible de réaliser des récipients assez profonds tout en évitant les pertes de matière constituées par les chutes de détourage. Le produit obtenu permet l'application de la technique connue sous le nom de Form-Fill-Seal ou FFS, c'est-à-dire thermoformage-remplissage-scellage, dont les avantages sont : un conditionnement en une seule opération, une limitation des risques de contamination de l'emballage et une réduction des coûts de production, de transport et de stockage des emballages. Le polystyrène est particulièrement adapté à cette technique en raison de sa rigidité et de sa facilité de mise en oeuvre par thermoformage.

Le jeton est obtenu par découpe dans une feuille épaisse extrudée.

Les chutes de détourage sont importantes mais peuvent être réutilisées car la feuille est homogène. Ce procédé convient pour les yaourts, par exemple.

Toutefois, le jeton est caractérisé par une isotropie qui découle de l'orientation naturelle subie par la feuille lors de son extrusion. Cette isotropie parce qu'elle est perpendiculaire à l'axe d'étirage, peut jouer un rôle néfaste lors de la phase de thermoformage du jeton.

Si l'on envisage le conditionnement de lait de longue conservation, il faut prévoir en plus une couche noire constituant une barrière aux UV. Dans le cas des jus de fruits, il faut prévoir une couche supplémentaire constituant une barrière aux gaz ou à la vapeur d'eau.

A cet effet, on utilise des jetons composés par un empilage de couches de compositions adéquates. De tels jetons multicouches sont par exemple décrits dans les brevets US 4 790 972 qui décrit un procédé de réalisation d'un jeton selon le préambule de la revendication 1, EP 0 533 437, FR 2.009.903 qui décrit un jeton selon le préambule de la revendication 9, US 5.091 231 et US 4.122.147.

Ces jetons multicouches sont usuellement découpés dans un matériau multicouche obtenu soit par empilage de feuilles, soit par co-extrusion des couches supplémentaires avec la feuille de polystyrène. Cependant, d'une part la co-extrusion en couches épaisses est délicate à maîtriser, d'autre part les chutes de détourage ne peuvent pas être réutilisées car elles sont hétérogènes, et le surcoût en résultant est prohibitif.

Les jetons décrits dans le EP 0 533 437 sont obtenus par un procédé qui peut être qualifié de mixte dans lequel une couche de résine est surmoulée par injection sur un pion formé préalablement, par exemple par découpe d'une feuille multicouche. Un tel procédé est coûteux car il nécessite la mise en oeuvre d'une installation de moulage par injection et de moyens de transfert du pion vers cette installation.

Un but de l'invention est de proposer un procédé de réalisation d'un jeton qui évite en grande partie les inconvénients précités, et dont les coûts de fabrication restent acceptables.

L'invention a pour objet un procédé de réalisation d'une préforme pour récipients thermoformés, se présentant sous la forme d'un jeton, caractérisé en ce qu'il comprend les étapes de :
- fabrication d'une partie inférieure du jeton, ladite fabrication comprenant l'extrusion d'une barre cylindrique et le tronçonnage de ladite barre en disques,
- fabrication d'une partie supérieure du jeton,
- assemblage des deux parties du jeton pour former le jeton.

Selon d'autres caractéristiques :
- la fabrication de la partie supérieure du jeton comprend la co-extrusion d'une feuille multicouche et le découpage de ladite feuille pour obtenir des disques ;
- l'assemblage des deux parties du jeton est assuré par thermoscellage ;
- la partie inférieure du jeton est homogène, de forte épaisseur et présente une orientation de même sens que l'axe d'étirage du jeton;
- la partie supérieure du jeton est de faible épaisseur ;
- la feuille multicouche comprend une couche barrière ;
- la feuille multicouche présente une couche supérieure compatible avec l'opercule du récipient thermoformé ;
- la feuille multicouche présente une couche inférieure modifiée pour le thermoscellage sur la partie inférieure du jeton.

L'invention a encore pour objet un jeton constituant une préforme pour le thermoformage d'un récipient, caractérisé en ce qu'il est constitué d'une partie inférieure homogène de forte épaisseur obtenue par tronçonnage d'une barre cylindrique extrudée et d'une partie supérieure de faible épaisseur.

Selon une autre caractéristique, la partie supérieure est obtenue par découpage d'une feuille multicouche comprenant une couche barrière.

D'autres caractéristiques ressortent de la description qui suit faite avec référence au dessin annexé dans lequel :
La figure 1 illustre schématiquement l'ensemble du procédé de réalisation d'un jeton selon l'invention ;
La figure 2 représente une vue en coupe de la partie supérieure d'un jeton prévu pour un récipient muni d'une barrière aux UV ;
La figure 3 représente une vue en coupe de la partie supérieure d'un jeton prévu pour un récipient muni d'une barrière aux gaz.

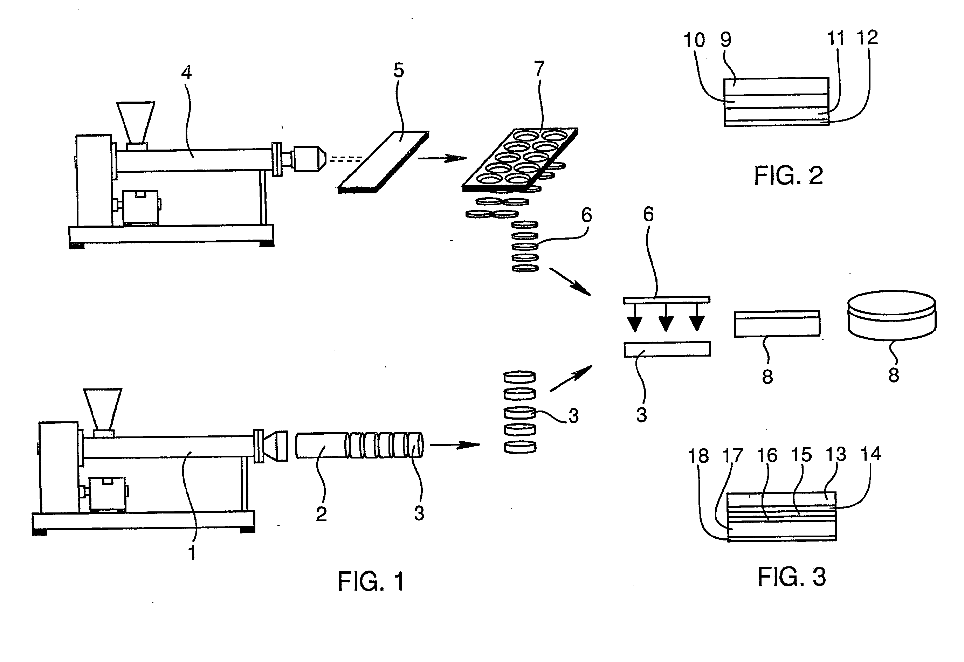

Sur la figure 1, le procédé de fabrication des jetons est représenté schématiquement. Il comporte deux branches parallèles qui se rejoignent dans la dernière étape.

Chacune des deux branches concerne la réalisation d'une partie du jeton, et la dernière étape est relative à l'assemblage des deux parties du jeton.

Le jeton est en effet constitué d'une partie inférieure ou de support, homogène, relativement épaisse, par exemple de 4mm d'épaisseur, et d'une partie supérieure ou de barrière, non homogène, peu épaisse, par exemple de 1mm d'épaisseur.

La partie inférieure du jeton est obtenue dans la branche représentée en bas de la figure 1, et la partie supérieure du jeton dans la branche représentée en haut de la figure 1.

La partie inférieure du jeton est obtenue par les étapes suivantes :
- extrusion par une extrudeuse 1 d'une barre cylindrique 2,
- tronçonnage de la barre cylindrique 2 pour obtenir des disques 3 destinés à constituer chacun la partie inférieure d'un jeton.

La partie supérieure du jeton est obtenue par les étapes suivantes :
- co-extrusion par une machine d'extrusion 4, d'une feuille multicouche 5,
- découpage de la feuille multicouche pour obtenir des disques 6 destinés à constituer chacun la partie supérieure d'un jeton.

L'assemblage des deux parties du jeton est effectué par thermoscellage, pour aboutir au jeton 8, représenté en vue de côté et en perspective.

Sur la figure 2, la partie supérieure 6 du jeton est constituée de quatre couches, du haut vers le bas :
- une couche supérieure 9 compatible avec l'opercule du récipient constitué par thermoformage du jeton,
- une couche barrière 10 anti UV, noire par exemple,
- une couche 11 dans le même polymère que la partie inférieure 3 du jeton,
- une couche inférieure 12 modifiée pour le thermoscellage sur la partie inférieure 3 du jeton.

Sur la figure 3, la partie supérieure 6 du jeton est constituée, du haut vers le bas, de six couches.
- une couche supérieure 13 compatible avec l'opercule du récipient constitué par thermoformage du jeton,
- une couche supérieure d'adhésif 14,
- une couche barrière aux gaz 15,
- une couche inférieure d'adhésif 16,
- une couche 17 dans le même polymère que la partie inférieure 3 du jeton,
- une couche inférieure 18 modifiée pour le thermoscellage sur la partie inférieure 3 du jeton.

Les différentes opérations de constitution, d'une part de la partie inférieure 3 du jeton, d'autre part de la partie supérieure 6 du jeton, peuvent être réalisées en ligne en sortie d'extrudeuse, ou en différé. Le thermoscellage des deux parties du jeton peut être réalisé en ligne ou en différé.

Ainsi, le jeton destiné à constituer une préforme de récipient à thermoformer présente une partie inférieure de forte épaisseur, par exemple 4mm, obtenue à partir d'une barre cylindrique extrudée et ensuite tronçonnée.

Une telle mise en oeuvre selon l'invention d'un procédé d'extrusion pour 'obtention de la partie inférieure permet avantageusement de fabriquer ladite partie inférieure pratiquement sans perte de matière.

De manière également avantageuse, la partie inférieure du jeton fabriquée à partir d'une barre extrudée est homogène et présente une orientation dans l'axe d'extrusion, c'est-à-dire perpendiculairement au plan moyen du jeton. Une telle homogénéité et une telle orientation ne peuvent pas être obtenues par les procédés d'injection ou de découpe dans une feuille usuellement mis en oeuvre lors de la fabrication de jetons. De plus, l'orientation de la partie inférieure est de même sens que l'axe d'étirage du jeton lors de la phase de thermoformage, ce qui améliore sa résistance aux contraintes d'étirage. La partie inférieure du jeton étant d'épaisseur nettement supérieure à la partie supérieure, elle assure la plus grande partie de la résistance mécanique du produit fini.

La partie supérieure du jeton, de faible épaisseur, par exemple 1 mm, est obtenue, après co-extrusion d'une feuille multicouche, incluant une couche barrière, par découpage de cette feuille. Les chutes de détourage sont limitées à l'épaisseur de la partie supérieure du jeton et sont d'un coût acceptable.

L'invention a été décrite dans un exemple de réalisation particulier, mais les dimensions indiquées n'ont qu'un caractère indicatif et des variantes de réalisation, notamment dans la structure de la partie supérieure du jeton, sont envisageables sans sortir du cadre de l'invention revendiquée.

## Revendications

1. Procédé de réalisation d'une préforme pour récipients thermoformés, se présentant sous la forme d'un jeton, qui comprend les étapes de :
- fabrication d'une partie inférieure (3) du jeton,
- fabrication d'une partie supérieure (6) du jeton,
- assemblage des deux parties du jeton pour former le jeton (8) **caractérisé en ce que** ladite fabrication d'une partie inférieure (3) comprend l'extrusion d'une barre cylindrique (2) et le tronçonnage de ladite barre (2) en disques (3).

2. Procédé selon la revendication 1, **caractérisé en ce que** la fabrication de la partie supérieure (6) du jeton comprend la co-extrusion d'une feuille multicouche (5) et le découpage de ladite feuille pour obtenir des disques (6).

3. Procédé selon la revendication 1, **caractérisé en ce que** l'assemblage des deux parties du jeton est assuré par thermoscellage.

4. Procédé selon la revendication 1, **caractérisé en ce que** la partie inférieure du jeton est homogène, de forte épaisseur, et présente une orientation de même sens que l'axe d'étirage du jeton.

5. Procédé selon la revendication 1, **caractérisé en ce que** la partie supérieure du jeton est de faible épaisseur.

6. Procédé selon la revendication 2, **caractérisé en ce que** la feuille multicouche (5) comprend une couche barrière (10, 15).

7. Procédé selon la revendication 2, **caractérisé en ce que** la feuille multicouche (5) présente une couche supérieure (9, 13) compatible avec l'opercule du récipient thermoformé.

8. Procédé selon la revendication 2, **caractérisé en ce que** la feuille multicouche (5) présente une couche inférieure (12, 18) modifiée pour le thermoscellage sur la partie inférieure (3) du jeton.

9. Jeton constituant une préforme pour le thermoformage d'un récipient, constitué d'une partie inférieure (3) homogène de forte épaisseur et d'une partie supérieure (6) de faible épaisseur, **caractérisé en ce que** la partie inférieure (3) est obtenue par tronçonnage d'une barre cylindrique extrudée et présente une orientation perpendiculaire au plan moyen du jeton.

10. Jeton selon la revendication 9, **caractérisé en ce que** la partie supérieure (6) est obtenue par découpage d'une feuille multicouche (5) comprenant une couche barrière (10, 15).

## Patentansprüche

1. Herstellungsverfahren einer Vorform für warmgeformte Behälter in Form eines Chips, das die folgenden Schritte umfasst:
- Herstellung eines unteren Teils (3) des Chips,
- Herstellung eines oberen Teils (6) des Chips,
- Verbindung der zwei Teile des Chips, um den Chip (8) zu bilden,
**dadurch gekennzeichnet, dass** die Herstellung eines unteren Teils (3) die Extrusion einer zylindrischen Stange (2) und das Zerteilen der Stange (2) in Scheiben (3) umfasst,

2. Verfahren nach Anspruch 1, **dadurch gekennzeichnet, dass** die Herstellung des oberen Teils (6) des Chips die Coextrusion einer mehrschichtigen Tafel (5) und das Schneiden der Tafel umfasst, um Scheiben (6) zu erhalten.

3. Verfahren nach Anspruch 1, **dadurch gekennzeichnet, dass** die Verbindung der zwei Teile des Chips durch Heißsiegeln durchgeführt wird.

4. Verfahren nach Anspruch 1, **dadurch gekennzeichnet, dass** der untere Teil des Chips homogen, von starker Dicke ist und eine Ausrichtung in derselben Richtung wie die Streckachse des Chips aufweist.

5. Verfahren nach Anspruch 1, **dadurch gekennzeichnet, dass** der obere Teil des Chips von geringer Dicke ist.

6. Verfahren nach Anspruch 2, **dadurch gekennzeichnet, dass** die mehrschichtige Tafel (5) eine Barriereschicht (10, 15) umfasst.

7. Verfahren nach Anspruch 2, **dadurch gekennzeichnet, dass** die mehrschichtige Tafel (5) eine obere Schicht (9, 13) umfasst, die mit der Öffnung des warmgeformten Behälters kompatibel ist.

8. Verfahren nach Anspruch 2, **dadurch gekennzeichnet, dass** die mehrschichtige Tafel (5) eine für das Heißsiegeln auf dem unteren Teil (3) des Chips modifizierte untere Schicht (12, 18) aufweist.

9. Chip, der eine Vorform für das Warmformen eines Behälters bildet, der von einem homogenen unteren Teil (3) starker Dicke und einem oberen Teil (6) geringer Dicke gebildet wird, **dadurch gekennzeichnet, dass** der untere Teil (3) durch Zerteilen einer extrudierten zylindrischen Stange hergestellt wird und eine Ausrichtung lotrecht zur mittleren Ebene des Chips aufweist.

10. Chip nach Anspruch 9, **dadurch gekennzeichnet, dass** der obere Teil (6) durch Schneiden einer mehrschichtigen Tafel (5) hergestellt wird, die eine Barriereschicht (10, 15) umfasst.

## Claims

1. A method for making a preform for thermoformed containers, assuming the form of a token, comprising the following steps:
- manufacturing a lower part (3) of the token,
- manufacturing an upper part (6) of the token,
- assembling the two parts of the token to form the token (8),
**characterized in that** said manufacturing of a lower part (3) comprises extruding a cylindrical bar (2) and cutting said bar (2) into disks (3).

2. The method according to claim 1, **characterized in that** the manufacturing of the upper part (6) of the token comprises coextruding a multi-layer sheet (5) and cutting said sheet to obtain disks (6).

3. The method according to claim 1, **characterized in that** the two parts of the token are assembled by heat sealing.

4. The method according to claim 1, **characterized in that** the lower part of the token is homogenous, very thick, and has an orientation in the same direction as the stretching axis of the token.

5. The method according to claim 1, **characterized in that** the upper part of the token is thin.

6. The method according to claim 2, **characterized in that** the multi-layer sheet (5) comprises a barrier layer (10, 15).

7. The method according to claim 2, **characterized in that** the multi-layer sheet (5) has an upper layer (9, 13) compatible with the membrane of the heat-sealed container.

8. The method according to claim 2, **characterized in that** the multi-layer sheet (5) has a lower layer (12, 18) modified for heat sealing on the lower part (3) of the token.

9. A token forming a preform for thermoforming a container made up of a thick homogenous lower part (3) and a thin upper part (6), **characterized in that** the lower part (3) is obtained by cutting an extruded cylindrical bar and has an orientation perpendicular to the mean plane of the token.

10. The token according to claim 9, **characterized in that** the upper part (6) is obtained by cutting a multi-layer sheet (5) comprising a barrier layer (10, 15).
